# EUROPÄISCHE PATENTSCHRIFT

(11) **EP 3 420 569 B1**
(45) Veröffentlichungstag und Bekanntmachung des Hinweises auf die Patenterteilung: **10.12.2025**
(21) Anmeldenummer: 18711473.1
(22) Anmeldetag: 08.02.2018
(51) Int. Cl.: H02K 37/02, H01F 7/14, G02B 26/08, G02B 26/10

(54) **RELUKTANZ-AKTOR**
RELUCTANCE ACTUATOR
ACTIONNEUR À RELUCTANCE

(30) Priorität: 10.02.2017 DE 102017202182
(43) Veröffentlichungstag der Anmeldung: 02.01.2019
(73) Patentinhaber: Micro-Epsilon Messtechnik GmbH & Co. KG, 94496 Ortenburg (DE)
(72) Erfinder: SCHITTER, Georg, 1230 Wien (AT); CSENCSICS, Ernst, 1040 Wien (AT); SCHLARP, Johannes, 1040 Wien (AT); SCHOPF, Tobias, 84371 Triftern (DE)
(74) Vertreter: Ullrich & Naumann PartG mbB
(86) Internationale Anmeldenummer: PCT/DE2018/200009
(87) Internationale Veröffentlichungsnummer: WO 2018/145704

(56) Entgegenhaltungen:
- EP-A2- 2 561 523
- EP-B1- 0 990 187
- EP-B1- 2 561 523
- WO-A1-2009/005157
- WO-A1-2009/005157
- WO-A1-2015/047343
- WO-A1-2015/047343
- WO-A1-2016/124782
- JP-A- H11 308 174
- JP-B1- S4 947 663
- JP-B1- S4 947 663
- US-A- 5 798 875
- US-A1- 2007 018 604
- US-A1- 2008 310 001
- US-A1- 2008 310 001
- US-A1- 2014 022 655
- US-A1- 2014 022 655
- US-A1- 2016 178 894
- US-B2- 6 906 848

## Beschreibung

Die Erfindung betrifft einen Reluktanz-Aktor, umfassend einen magnetisierbaren Stator, zumindest eine Spule, die zur Erzeugung eines Magnetfelds in dem Stator ausgebildet ist, und ein Joch zum zumindest teilweisen Schließen des magnetischen Fluss des Stators.

Die Erfindung betrifft weiter ein Aktor-System umfassend einen Reluktanz-Aktor.

Die Erfindung betrifft weiter ein Verfahren zur Durchführung von Hub-/Kippbewegungen eines beweglichen Elements eines Reluktanz-Aktors.

Obwohl auf beliebige Systeme anwendbar, wird die vorliegende Erfindung in Bezug auf Betätigungssysteme für optische Komponenten beschrieben.

Bekannte opto-mechanische Hub/Kipp-Systeme, beispielsweise schnell steuerbare Spiegel, sog. fast steering mirros FSM, werden in einer Vielzahl von Anwendungen eingesetzt. Weitere bekannte Betätigungssysteme basieren auf Lorentz-Aktuatoren, wie beispielsweise aus der Nicht-Patentliteratur M. Hafez, T. Sidler, R. Salathe, G. Jansen, and J. Compter, Design and simulations and experimental and investigations of a compact single mirror tip/tilt laser scanner, Mechatronics, vol. 10, pp. 741-760, 2000 bekannt geworden ist oder auf Piezo-Aktoren, beispielsweise bekannt geworden aus der Nicht-Patentliteratur F.M. Tapos, D.J. Edinger, T.R. Hilby, M.S. Ni, B.C. Holmes, and D.M. Stubbs, High bandwith fast steering mirror, Optomechanics 200, Proceedings of SPIE Vol. 5877, 2005.

Aktoren auf Basis von Lorentz-Aktuatoren werden in Systemen mit einem großen Abtast-Bereich typischerweise bis zu zwei Grad aber mit beschränkter Bandbreite lediglich mehrere 100 Hz eingesetzt. Piezo-Aktoren werden hingegen in Systemen mit hoher Bandbreite bis zu mehreren kHz aber mit kleinen Abtastbereichen typischerweise lediglich einige mrad eingesetzt.

Reluktanz-Aktoren weisen verglichen mit Lorentz-Aktuatoren eine höhere Kraftdichte auf und größere Abtastbereiche verglichen mit Piezo-Aktoren. Reluktanz-Aktoren werden in verschiedensten Anwendungsbereichen eingesetzt, bspw. für Rotationsbewegungen für schnell steuerbare Spiegelsysteme.

Nachteilig dabei ist jedoch, dass die zwei unterschiedlichen Aktor-Paare für ein Verkippen um zwei Achsen um das bewegliche Element herum angeordnet sind, was zwar schnelle Beschleunigungen des beweglichen Elementes ermöglicht, jedoch den Bauraum des Aktors insgesamt erheblich vergrößert und den maximal erreichbaren optischen (Auslenk-)Winkel erheblich beschränkt. Weitere Reluktanz-Aktoren sind beispielsweise aus der Nicht-Patent Literatur M. Boulet, Design of a small fast steering mirror for airbone and aerospace applications, Master s Thesis, Massachusetts Institute of Technology, 2008 und Y. Long, C. Wang, X. Dai, X. Wei, and S. Wang, Modeling and analysis of a novel two-axis rotary electromagnetic actuator for fast steering mirror, Journal of Magnetics, vol. 19, no. 2, pp. 130-139, 2014 bekannt geworden.

Weitere Aktoren sind aus der WO 2016/124782 A1, der US 2016/0178894 A1, der US 6,906,848 B2, der US 2007/018604 A1, der US 5,798,875 A1, der JP-H11-308174 A und der EP 0 990 187 B1 bekannt geworden.

All diese bekannten Reluktanz-Aktoren weisen jedoch ebenfalls den Nachteil auf, dass die vier unterschiedlichen Aktoren bzw. zwei Aktor-Paare um das bewegliche Element herum angeordnet sind und damit den Bauraum wesentlich vergrößern und gleichzeitig den maximal erreichbaren optischen (Auslenk-)Winkel verkleinern. Letztlich schränkt dies die Einsatz- bzw. Verwendungsmöglichkeiten deutlich ein.

Eine Aufgabe der vorliegenden Erfindung ist es daher, einen Reluktanz-Aktor zur Verfügung zu stellen, der zum einen kompakt baut, zum anderen flexibel einsetzbar ist und darüber hinaus eine hohe Bandbreite und eine große Auslenkung ermöglicht bei gleichzeitig hoher Zuverlässigkeit.

Die vorliegende Erfindung löst die vorstehend genannte Aufgabe mit einem Reluktanz-Aktor gemäß Anspruch 1.

Die vorliegende Erfindung löst die Aufgaben ebenfalls mit einem Aktor-System gemäß Anspruch 14.

Die vorliegende Erfindung löst die vorstehend genannte Aufgaben ebenfalls mit einem Verfahren gemäß Anspruch 15.

Einer der damit erzielten Vorteile ist, dass ein extrem kompakter und hochdynamischer Aktor zur Verfügung gestellt werden kann, da insbesondere das Joch einen im Wesentlichen äußeren Abschluss des Aktors bildet. Ein weiterer Vorteil einer Ausführungsform ist, dass das bewegliche Element eine geringe Masse aufweist, wenn das bewegliche Element auch genannt Mover nur aus dem den magnetkreisschließenden Joch besteht; der Aktor weist somit eine hohe Bandbreite auf.

Ein weiterer Vorteil des als bewegliches Element ausgebildeten Jochs besteht darin, dass das bewegliche Element nicht räumlich innerhalb des den Magnetkreis schließenden Jochs angeordnet ist, sondern einen, insbesondere einseitigen räumlichen Abschluss des Aktors bildet, mit anderen Worten ist das Joch bzw. das bewegliche Element im Wesentlichen außenliegend angeordnet im Gegensatz zum Stand der Technik, bei dem das Joch, wie oben ausgeführt, im Inneren angeordnet ist. Damit kann der vorhandene Bauraum sehr gut ausgenutzt werden, da kein Überstand von zum Beispiel Joch oder Spulen besteht: Mit anderen Worten ist das bewegliche Element nahezu an der äußersten Stelle des gesamten Aktors angeordnet, wodurch kein Bauteil des Aktors über das bewegliche Element hinausragt.

Ein weiterer Vorteil ist die große, insbesondere seitliche, Überdeckung des beweglichen Elements im Verhältnis zum Stator und Spulen: das Verhältnis der Nutzfläche des beweglichen Elements zum Gesamtdurchmesser des Aktors ist äußerst hoch. Der Begriff bewegliches Element ist im weitesten Sinne zu verstehen: Synonyme Begriffe für den Begriff bewegliches Element sind die Begriffe Mover oder Rotor . Das bewegliche Element im Sinne der vorliegenden Erfindung bildet ein Joch, um die Magnetfeldlinien zu schließen und bildet bzw. dient als Mover oder Rotor . Das bewegliche Element bildet insbesondere keinen Kern.

Weitere Merkmale, Vorteile und bevorzugte Ausführungsformen der Erfindung sind im Folgenden beschrieben oder werden dadurch offenbar:
Vorteilhafterweise weist der Stator einen permanent-magnetischen Bereich auf. Damit lässt sich auf einfache Weise eine magnetische Vorspannung im Stator erzeugen. Der Stator ist im Querschnitt entlang zumindest einer Achse E-förmig mit zwei äußeren und einem inneren Polschuh ausgebildet. Ein E-förmiger Stator ermöglicht einen geringeren Gesamtdurchmesser des Aktors verglichen mit den üblicherweise verwendeten C-förmigen Statoren.

Dabei ist der Stator entlang zweier Achsen, die unter einem bestimmten Winkel zueinander angeordnet sind, jeweils im Querschnitt E-förmig ausgebildet. Damit lässt sich auf einfache und kompakte Weise ein Verkippen um zwei Achsen unabhängig voneinander erreichen.

Zweckmäßigerweise beträgt der Winkel zwischen den beiden Achsen 90°. Damit lässt sich eine Verkippung um die x- und y- Achse erreichen.

Zweckmäßigerweise weist zumindest eine der Spulen eine Spulenachse auf, die im Wesentlichen senkrecht zur Auslenkungsrichtung des beweglichen Elements angeordnet ist, insbesondere wobei der Stator zumindest teilweise in der Spule angeordnet ist. Vorteil hiervon ist eine besonders flache Bauform in z-Richtung.

Vorteilhafterweise ist der innere Polschuh des E-förmigen Stators entlang einer Achse identisch mit dem inneren Polschuh entlang der zweiten Achse. Auf diese Weise ist ein einfacher und kompakter Aufbau möglich. Darüber hinaus kann mit einem einzigen permanentmagnetischen Bereich am inneren Polschuh eine magnetische Vorspannung in den 4 äußeren Polschuhen erreicht werden.

Vorteilhafterweise ist der permanent-magnetische Bereich am inneren Polschuh des E-förmigen Stators angeordnet. Damit lässt sich auf einfache Weise eine magnetische Vorspannung in allen Polschuhen des Stators erreichen.

Zweckmäßigerweise ist der permanentmagnetische Bereich im Übergangsbereich des die Polschuhe des E-förmigen Stators verbundenen Bereichs angeordnet. Damit kann die magnetische Vorspannung besonders zuverlässig auch auf die weiteren Polschuhe übertragen werden.

Das bewegliche Element ist mittels zumindest eines Biegeelements an einem Gehäuse des Reluktanz-Aktors beweglich angeordnet. Dies ermöglicht eine einfache und gleichzeitig zuverlässige Festlegung des beweglichen Elements.

Dabei weist das Biegeelement einen inneren und äußeren Bereich auf, sowie zumindest zwei Aufhängungen, wobei die beiden Bereiche über die zumindest zwei Aufhängungen miteinander verbunden sind. Damit wird eine äußerst zuverlässige und doch flexible Festlegung und Bewegung des beweglichen Elements erreicht.

Zweckmäßigerweise ist das zumindest eine Biegeelement aus einem federnden Material, insbesondere aus Beryllium und/oder einem Kunststoff oder Aluminium hergestellt. Dies ermöglicht ein leichtes bewegliches Element und gleichzeitig eine zuverlässige Festlegung desselben.

Vorteilhafterweise ist das bewegliche Element direkt mit dem zumindest einen Biegeelement, insbesondere mit dem inneren Bereich des zumindest einen Biegeelements verbunden. Damit wird eine kostengünstige Herstellung, eine direkte Kraftübertragung zwischen Biegeelement und beweglichem Element und eine geringe Trägheit von Biegeelement und beweglichen Element ermöglicht.

Zweckmäßigerweise sind das bewegliche Element und das Biegeelement einstückig ausgebildet. Damit wird der Herstellungsaufwand reduziert.

Vorteilhafterweise sind das bewegliche Element und das Biegeelement aus ferromagnetischem Stahl, insbesondere Federstahl, hergestellt. Vorteil hierbei ist die kompakte Bauform, die geringe Trägheit sowie die Lage des Drehpunktes des beweglichen Elements nahe der Oberfläche.

Zweckmäßigerweise ist das Biegeelement oder das bewegliche Element zumindest teilweise verspiegelt ausgebildet. Auf diese Weise kann das jeweilige selbst als Spiegel dienen; ein zusätzliches Aufbringen eines Spiegels entfällt, was den Herstellungsaufwand reduziert.

Zweckmäßigerweise ist das bewegliche Element mittels zumindest eines Lagers, insbesondere in Form eines Kugellagers, eines Punktlagers in Form einer Spitze aus Hartmetall, Saphir oder dergleichen oder in Form eines Biegeelements, insbesondere mittig am inneren bzw. mittleren Polschuh des Stators, gelagert. Dies ermöglicht auf einfache und kostengünstige Weise Kippbewegungen des beweglichen Elements durch Festlegung eines Rotationspunktes. Darüber hinaus werden Kräfte in z-Richtung kompensiert, d. h., von Kräften, die im Wesentlichen parallel zu den Polschuhen des Stators wirken.

Vorteilhafterweise ist das zumindest eine bewegliche Element mittels zumindest eines Luftspalts zu dem Stator beabstandet angeordnet. Damit wird einerseits die Beweglichkeit sichergestellt, andererseits trotzdem ein im Wesentlichen vollständiges Schließen des Magnetkreises zwischen Joch bzw. beweglichem Element und Stator.

Zweckmäßigerweise weist der Stator vier äußere Polschuhe auf, wobei an jeweils zwei der vier Polschuhe, die jeweils gegenüberliegend angeordnet sind, jeweils eine Spule angeordnet ist. Damit wird auf einfache Weise eine Bewegung des beweglichen Elements entlang zweier Achsen ermöglicht. Die Spulen können dabei in Reihe geschaltet sein. Sind an allen vier Polschuhen Spulen angeordnet, wirken jeweils zwei gegenüberliegende Spulen zur Bewegung des beweglichen Elements um eine Achse zusammen. Das bewegliche Element kann dann um zwei Achsen gekippt werden.

Vorteilhafterweise ist der Stator geblecht ausgebildet. Dies verhindert auf zuverlässige Weise Wirbelströme und die Effizienz des Aktors wird erhöht.

Zweckmäßigerweise sind nur die äußeren Polschuhe des Stators aus mehreren isolierenden Schichten hergestellt. Damit kann der innere Teil beispielsweise lediglich aus ferromagnetischem Material hergestellt werden, was die Herstellung desselben vereinfacht, z.B. durch Drehen aus Vollmaterial.

Vorteilhafterweise ist der innere Polschuh des Stators zylinderförmig ausgebildet. Damit wird ein gleichmäßiges Verkippen in jede Raumrichtung sichergestellt. Darüber hinaus kann dieser einfach hergestellt werden, bspw. durch Drehen.

Zweckmäßigerweise ist das Joch ferromagnetisch ausgebildet. Damit kann im Joch bzw. im beweglichen Element auf Permanentmagneten, etc. verzichtet werden, sodass ein geringes Gewicht des beweglichen Elements ermöglicht wird.

Vorteilhafterweise ist das Joch aus Stahl hergestellt. Dies ermöglicht ein zuverlässiges Schließen des Magnetkreises mittels des Jochs und gleichzeitig eine lange Lebensdauer desselben.

Zweckmäßigerweise ist das bewegliche Element im Wesentlichen als vorzugsweise kreis-, ellipsen- oder sternförmige Scheibe ausgebildet. Mittels der Scheibenform kann eine flache Bauform des beweglichen Elements erreicht werden. Der Drehpunkt des beweglichen Elements ist somit nahe an seiner Oberfläche. Darüber hinaus wird ein kompakter Bauraum erreicht. Das Verhältnis des Durchmessers der Scheibe zu ihrer Dicke kann bspw. zwischen 5 und 100.000 insbesondere, zwischen 10 und 10.000, insbesondere zwischen 100 und 1.000 betragen. Bei Ausbildung des beweglichen Elements als sternförmige Scheibe ist der Magnetfluss der gegenüberliegenden Spulen durch die gegenüberliegenden Sternarme hergestellt. Das bewegliche Element weist dadurch eine geringere Masse auf.

Vorteilhafterweise ist die Scheibe symmetrisch entlang zumindest einer Achse ausgebildet. Dies ermöglicht eine einfache Herstellung gleichzeitig ein zuverlässiges Verkippen des beweglichen Elements.

Zweckmäßigerweise sind vier Aufhängungen angeordnet, wobei der Festlegungspunkt der jeweiligen Aufhängung am inneren Bereich und am äußeren Bereich in Umfangsrichtung des beweglichen Elements jeweils um 90° versetzt zueinander angeordnet sind. Damit wird einerseits auf zuverlässige Weise die Bewegung entlang der unerwünschten Freiheitsgrade eingeschränkt, andererseits wird die negative Steifheit des Aktors mit einer geringen Steifheit kompensiert in zwei gewünschte Richtungen/Freiheitsgrade.

Vorteilhafterweise ist die Form der zumindest einen Aufhängung im Wesentlichen zumindest teilweise entsprechend dem Verlauf der Außenkontur des inneren Bereichs des Biegeelements ausgebildet. Damit kann eine besonders kompakte und symmetrische Bauform des Aktors insgesamt erreicht werden.

Zweckmäßigerweise ist beim Aktor-System eine Rückmeldungs- und Steuereinrichtung angeordnet und mit dem Reluktanz-Aktor zur Kontrolle der Bewegung des beweglichen Elements um zumindest eine Achse verbunden. Damit wird auf einfache und zuverlässige Weise eine Kontrolle und Regelung der Auslenkung des beweglichen Elements ermöglicht.

Vorteilhafterweise umfasst die Rückmeldungs- und Steuereinrichtung eine Positionsmesseinheit, insbesondere eine Winkelpositionsmesseinheit, eine Stromverstärkereinheit oder eine Spannungsverstärkereinheit, und/oder eine Ausgangsstrommesseinheit. Damit lassen sich insbesondere wesentliche Größen zur Betätigung und Kontrolle des Aktors messen.

Vorteilhafterweise bildet das Joch einen im Wesentlichen seitlichen äußeren Abschluss des Aktors. Damit wird ein besonders kompakter Bauraum erreicht.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen. Dabei zeigt
- Figur 1a: eine Querschnittansicht eines Reluktanz-Aktors;
- Figur 1b: eine Querschnittansicht eines Reluktanz-Aktors gemäß einer Ausführungsform der vorliegenden Erfindung;
- Figur 2: in schematischer Form die Wirkungsweise eines Reluktanz-Aktors gemäß einer Ausführungsform der vorliegenden Erfindung;
- Figur 3: ein Biegeelement gemäß einer Ausführungsform der vorliegenden Erfindung in nicht ausgelenktem Zustand;
- Figur 4: das Biegeelement gemäß Figur 3 in ausgelenktem Zustand;
- Figur 5a, b: jeweils eine Querschnittansicht eines Reluktanz-Aktors gemäß einer Ausführungsform der vorliegenden Erfindung; und
- Figur 6: ein Biegeelement gemäß einer Ausführungsform der vorliegenden Erfindung in nicht ausgelenktem Zustand.

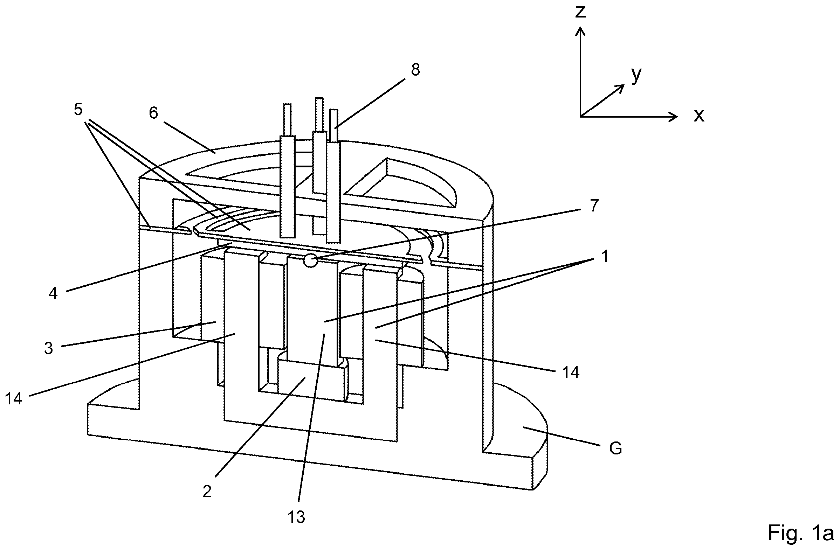

Figur 1a zeigt eine Querschnittansicht eines Reluktanz-Aktors.

In Figur 1a ist eine Querschnittansicht eines Hybrid-Aktors entlang einer Systemachse zusammen mit einigen Komponenten desselben gezeigt.

Der Reluktanz-Aktor umfasst ein im Wesentlichen zylinderförmiges Gehäuse G. In dem Gehäuse G ist ein E-förmiger Stator 1 angeordnet, an dessen innerem Polschuh 13 ein Permanent-Magnet 2 und an dessen beiden äußeren Polschuhen 14 jeweils eine Spule 3 angeordnet ist. Auf der Oberseite des Stators 1 ist außenliegend ein Joch zum Schließen des magnetischen Kreises ausgebildet als bewegliches Element 4 angeordnet, welches direkt mit einem Biegeelement 5 bzw. Rückstellelement verbunden ist und das die Bewegung des beweglichen Elements 4 hinsichtlich dreier Freiheitsgrade beschränkt. Weiterhin ist am oberen Ende des inneren Polschuhs 13 des Stators 1 ein Kugellager 7 angeordnet, welches den Rotationspunkt des bewegliches Elements 4 festlegt und die Bewegung des bewegliches Elements 4 um einen weiteren Freiheitsgrad beschränkt.

Die einzelnen Polschuhe 13, 14 des entlang einer Achse E-förmigen Stators 1 des Reluktanz-Aktors sind unterhalb des Permanentmagneten 2 miteinander verbunden, sodass ein einzelner magnetischer Kreis entsteht und ein einzelner Permanentmagnet 2 zur magnetischen Vorspannung des gesamten Systems verwendet werden kann. Zur Veranschaulichung des Grundprinzips von der Ausführungsform der Erfindung sind oberhalb des Biegeelements 5 an dem Gehäuse G des Aktors 1, 2, 3, 4, 5, 7 am äußeren oberen Umfang Bohrungen 6 angeordnet, mit denen beispielsweise Sensoren festgelegt werden können. Ein Beispiel für derartige Sensoren sind Wirbelstromsensoren 8.

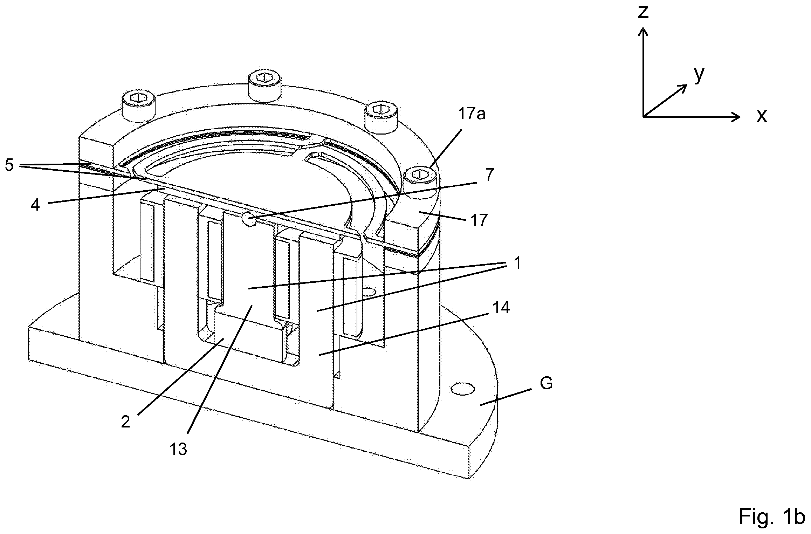

Figur 1b zeigt eine Querschnittansicht eines Reluktanz-Aktors gemäß einer Ausführungsform der vorliegenden Erfindung.

In Figur 1b ist im Wesentlichen ein Reluktanz-Aktor gemäß Figur 1a gezeigt. Im Unterschied zum Reluktanz-Aktor gemäß Figur 1a sind bei Reluktanz-Aktor gemäß Figur 1b zum einen die Sensoren 8 nicht gezeigt, zum anderen ist ein Befestigungsring 17 gezeigt mit dem das Biegeelement 5 am Gehäuse G festgelegt ist.

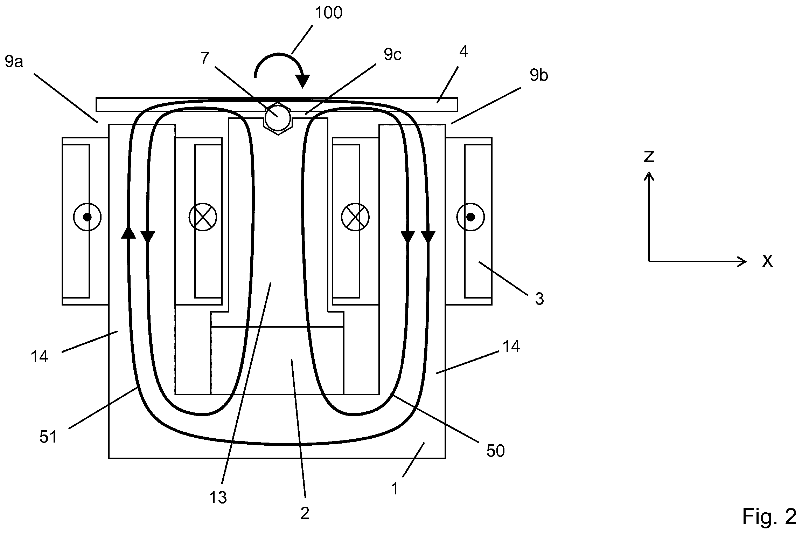

Figur 2 zeigt in schematischer Form die Wirkungsweise eines Reluktanz-Aktors gemäß einer Ausführungsform der vorliegenden Erfindung.

Am inneren Polschuh 13 des Stators 1 des Aktors ist ein Permanentmagnet 2 angeordnet, der einen gleichmäßigen magnetischen Vorspannungsfluss erzeugt, welcher durch das Zentrum, den inneren Polschuh 13 des ferromagnetischen Stators 1, einen mittleren Luftspalt 9c, gebildet durch das Kugellager 7 zwischen innerem Polschuh 13 und beweglichem Element 4 und durch das ferromagnetische bewegliche Element 4 fließt und der über die Arbeitsluftspalte 9a, 9b und den linken bzw. rechten äußeren Polschuh 14 des Stators 1 entsprechend zurückfließt. Der gleichmäßige magnetische Vorspannungfluss wird durch die Linie 50 in Fig. 2 gezeigt.

Ist das bewegliche Element 4 in seiner Null-Position/Ausgangsposition/nicht ausgelenkten Position fließt der gleichmäßige magnetische Vorspannungsfluss durch den linken und rechten Arbeitsluftspalt 9a, 9b zu gleichen Teilen, sodass das Nettodrehmoment 100 auf das bewegliche Element 4 im Wesentlichen gleich Null ist unter der Voraussetzung, dass kein Strom durch die Aktorspulen 3 fließt.

Die Aktorspulen 3 sind in Serie geschaltet, sodass bei entsprechendem Stromfluss durch die Spulen 3 ein magnetischer Fluss, durch die Linie 51 in Fig. 2 gezeigt, erzeugt wird, der durch die äußeren Polschuhe 14 des Stators 1, das bewegliche Element 4 und die Arbeitsluftspalte 9a, 9b entweder im Uhrzeigersinn oder im Gegenuhrzeigersinn in Abhängigkeit der Stromrichtung in den Spulen 3 fließt. Da der Permanentmagnet 2 einen hochohmigen magnetischen Widerstand (Reluktanz) für äußere magnetische Felder darstellt, fließt der magnetische Fluss der Spulen 3 eher durch die äußeren Polschuhe 14 als durch den inneren Polschuh 13 des Stators 1. Der gleichmäßige magnetische Vorspannungsfluss 50 und der zeitlich variierende magnetische Spulenfluss 51 überlagern sich in den beiden Arbeitsluftspalten 9a, 9b. Dies resultiert in einem erhöhten Gesamtfluss in dem rechten Arbeitsluftspalt 9b, da beide magnetischen Flüsse 50, 51 in die gleiche Richtung fließen und in einem reduzierten magnetischen Fluss in dem linken Arbeitsspalt 9a, sodass im Uhrzeigersinn ein Nettodrehmoment 100 auf das bewegliche Element 4 wirkt. Bei Umkehrung der Stromrichtung in den Spulen 3, wird auch der magnetische Fluss der Spulen umgekehrt und verursacht ein Nettodrehmoment 100 auf das bewegliche Element 4 im Gegenuhrzeigersinn.

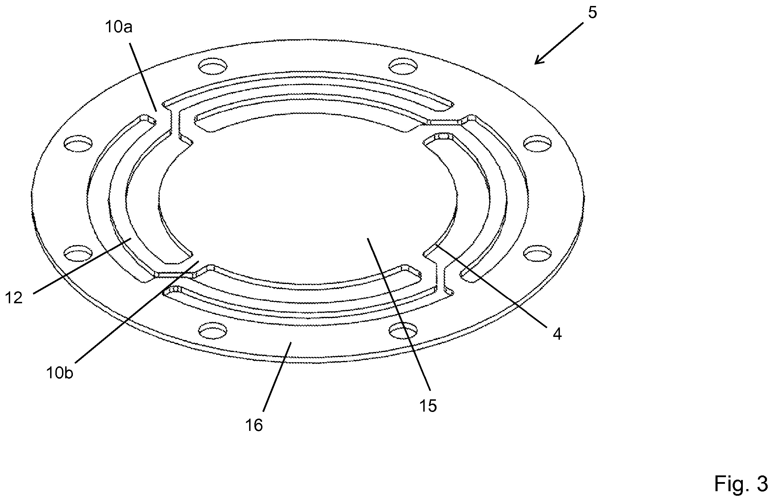

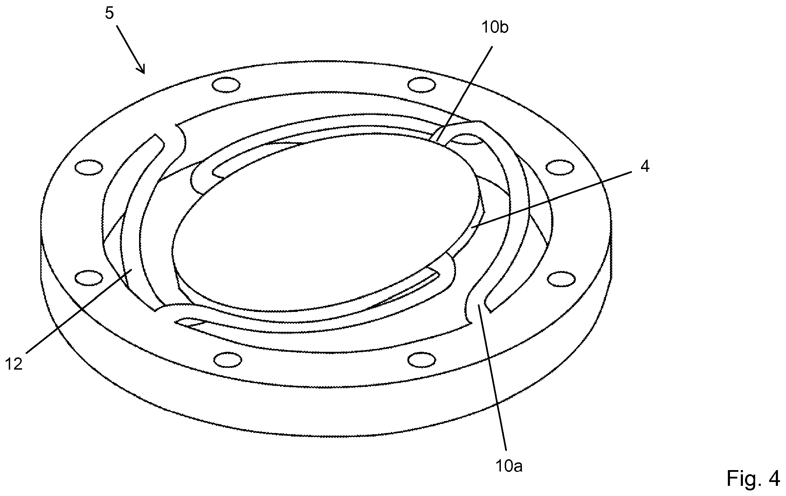

Ist kein Spulenstrom vorhanden, wird die Verteilung des magnetischen Vorspannflusses über den Arbeitsluftspalte 9a, 9b durch die Position des beweglichen Elementes 4 und die resultierende Reluktanz bestimmt. In Auslenkung wird ein höherer magnetischer Fluss durch den kleineren Luftspalt 9a, 9b fließen und ein vergrößertes Drehmoment 100 wird auf das bewegliche Element 4 in Richtung der ursprünglichen Auslenkung erzeugt. Dies ist gleichbedeutend mit einer negativen Steifheit des Aktors und zeigt, dass das Betätigungsprinzip des Aktors selbst inhärent instabil aufgrund des vorhandenen Permanentmagneten 2 ist. Das Biegeelement 5 wird deshalb so ausgebildet, um die negative Steifheit des Aktors zu kompensieren bzw. um das inhärent instabile Betätigungsprinzip zu stabilisieren. Ein derartiges Biegeelement 5 ist in den Figuren 3 und 4 gezeigt.

Figur 3 zeigt ein Biegeelement gemäß einer Ausführungsform der vorliegenden Erfindung in nicht-ausgelenktem Zustand und Figur 4 ein Biegeelement gemäß Figur 3 in ausgelenktem Zustand.

In Figur 3 bzw. 4 ist ein Biegeelement 5 gezeigt, auf dessen Unterseite das bewegliche Element 4 angeordnet und direkt mit dem Biegeelement 5 verbunden ist. Das Biegeelement 5 ist dabei im Wesentlichen entsprechend der Form des beweglichen Elements 4 ausgebildet bzw. beide sind dementsprechend aufeinander abgestimmt: Beide Elemente 4,5 sind in den Figuren 3, 4 im Wesentlichen scheibenförmig und kreisförmig ausgebildet. Das Biegeelement 5 weist an seiner Außenseite einen Befestigungsring 17 zum Befestigen des Biegeelements 5 am Gehäuse G des Aktors auf. Der innere Bereich 15 des Biegeelements 5 wird durch eine Scheibe gebildet, wie vorstehend ausgeführt. Der innere Bereich 15 und der äußere Bereich 16 des Biegeelements 5 sind über symmetrisch über den Umfang verteilte Aufhängungen 12 miteinander verbunden. Dabei sind die Festlegungspunkte 10a der Aufhängung 12 an der Scheibe 5 und die Festlegungspunkte 10b der Aufhängung 12 am äußeren Bereich 16 um 90° in Umfangsrichtung jeweils versetzt angeordnet, die Aufhängungen entsprechen in der Form im Wesentlichen Viertelkreisen.

Figur 4 zeigt eine entsprechende Auslenkung des beweglichen inneren Bereichs 15 zusammen mit dem beweglichen Element 4. Das ferromagnetisch ausgebildete bewegliche Element 4 ist dabei direkt mit dem Biegeelement 5 verbunden. Aufgrund der magnetischen Vorspannung durch den Permanentmagneten 2 gibt es hohe Versatzkräfte in z-Richtung. Diese würden das Biegeelement 5 beschädigen, welches nicht mit ausreichender Steifheit in z-Richtung ausgebildet werden kann ohne auch die Steifheit in den beiden gewünschten Rotationsfreiheitsgraden zur Verkippung nachteilig heraufzusetzen. Um dies zu vermeiden, wird ein Kugellager 7 benutzt, zum einen um die Kräfte in z-Richtung zu kompensieren und zum anderen den Rotationspunkt festzulegen. Das Biegeelement 5 kann dabei aus Aluminium hergestellt sein und beschränkt wie ausgeführt die Translationsfreiheitsgrade in x-und y-Richtung und den Rotationsfreiheitsgrad um die z-Achse. Mit anderen Worten werden nur Rotationen um die x- und y-Achse Verkippung ermöglicht. Aufgrund der direkten Verbindung von Biegeelement 5 und beweglichem Element 4 wird die Trägheit minimiert.

Weiterhin kann der Stator 1 an seinen äußeren Polschuhen 14 eine Schichtstruktur aus mehreren isolierenden Materialien aufweisen, um das Entstehen von Wirbelströmen zu verhindern und deren Auswirkungen auf die Bandbreite sprich eine Verminderung derselben. Weiterhin kann der Reluktanz-Aktor mit einer Kontrolleinrichtung versehen sein, um die Position des beweglichen Elementes 4 festzustellen bzw. zu steuern oder zu regeln. Diese kann hinsichtlich jeder Achse die Position bestimmen bzw. steuern oder zu regeln. Hierzu kann beispielsweise ein Verstärker vorgesehen sein sowie eine Steuereinrichtung für den Strom der Spulen und eine Steuer-/Kontrolleinrichtung für den Kippwinkel in jede Richtung der betätigbaren Achsen des beweglichen Elements 4.

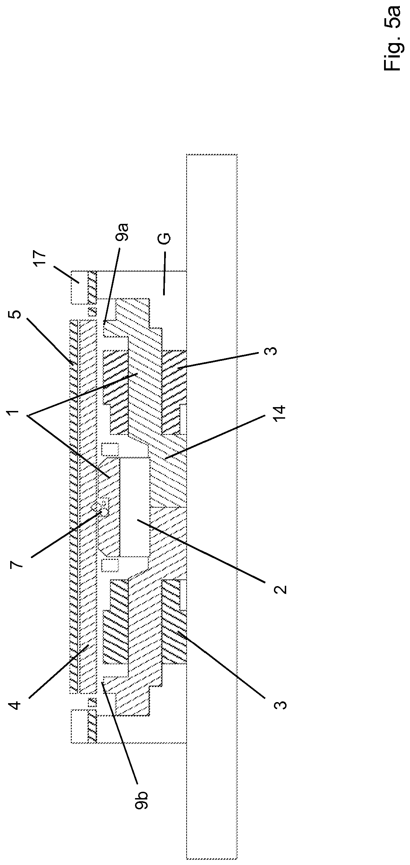

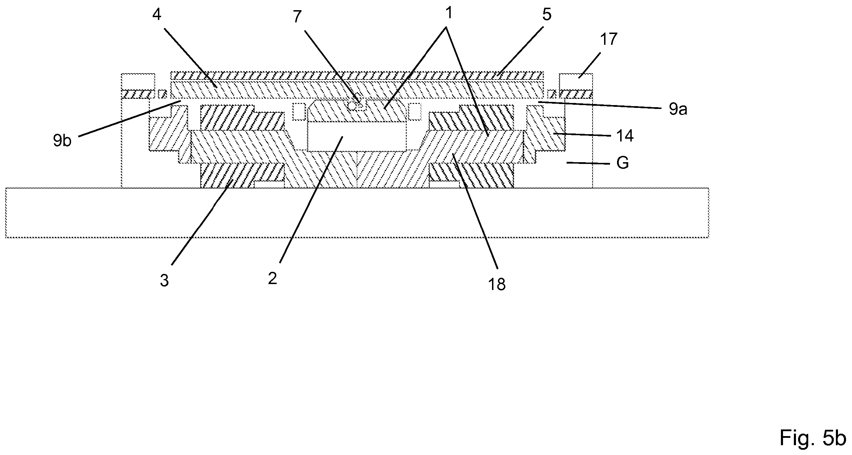

Figur 5a, b zeigen jeweils eine Querschnittansicht eines Reluktanz-Aktors gemäß einer Ausführungsform der vorliegenden Erfindung.

In Figur 5a und Figur 5b ist jeweils ein Reluktanz-Aktor gemäß Figur 1b gezeigt. Im Unterschied zum Reluktanz-Aktor gemäß Figur 1b erstrecken sich bei den Reluktanz-Aktoren gemäß den Figuren 5a und Figur 5b die Polschuhe 14 im Wesentlichen horizontal zur Bodenplatte des Gehäuses G. Die Spulen 3 sind dabei ebenfalls mit ihrer Achse horizontal um die Polschuhe 14 angeordnet. In Figur 5a ist der Polschuh 14 einteilig ausgeführt, in Figur 5b ist dieser zweiteilig, wobei dann als Polschuh 14 lediglich das äußere Ende eines Kerns 18 bezeichnet wird. Der Polschuh 14 ist so angepasst, dass der Magnetfluss in geeigneter Weise zu dem Joch, bzw. zum beweglichen Element 4, geführt wird. Der Kern 18 mit dem Polschuh 14 kann, wie vorstehend ausgeführt, dabei einteilig (siehe Figur 5a) oder zweiteilig (siehe Figur 5b) ausgeführt sein. In Figur 5b ist der Polschuh 14 am Kern 18 angeordnet bzw. festgelegt. Mit anderen Worten ist in dieser liegenden Ausführung also der Polschuh 14 so nach oben im Endbereich gerichtet, dass das magnetische Feld hin zum beweglichen Element 4 gerichtet wird. Diese Ausführungsform ermöglicht somit eine besonders flache Bauform.

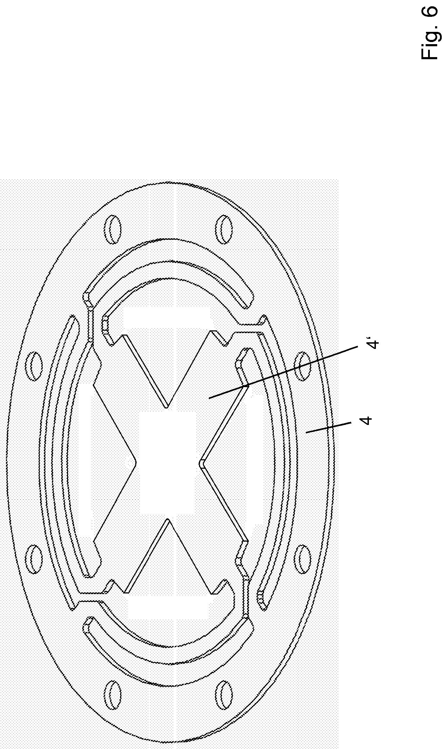

Figur 6 zeigt ein Biegeelement gemäß einer Ausführungsform der vorliegenden Erfindung in nicht ausgelenktem Zustand.

In Figur 6 ist ein Biegeelement 4 gezeigt, welches sternförmig, hier mit Strahlen 4 in Form eines Kreuzes mit 90° gekreuzten Balken, ausgebildet ist. Die vier Strahlen 4 oder Arme des Kreuzes werden bei Montage des Biegeelements 4 im Wesentlichen über dem jeweiligen Polschuh 14 angeordnet, um eine Verkippung um zwei Achsen zu ermöglichen. Die Festlegungspunkte der Aufhängungen für das Biegeelement 4 und die Festlegungspunkte am äußeren Bereich sind dabei analog zur Figur 3 bzw. Figur 4 um 90° in Umfangsrichtung jeweils versetzt angeordnet.

Zusammenfassend weist die Erfindung, insbesondere zumindest eine Ausführungsform, die folgenden Vorteile auf:
- geringe bewegte Masse, dadurch hohe Bandbreite, da das bewegliche Element nur aus dem den magnetkreisschließenden ferromagnetischen Joch ohne Permanentmagneten Tauchanker, etc. ausgeführt ist
- das bewegliche Element sitzt nicht innerhalb des den magnetkreisschließenden Jochs, sondern bildet einen einseitigen Abschluss des Aktors, was den Vorteil aufweist dass der vorhandene Bauraum sehr gut ausgenutzt wird, da
   ∘ keine Überstande von z. B. Joch oder Spulen vorhanden sind, d. h. der Mover sitzt nahezu an der äußersten Stelle des gesamten Aktuators, wodurch kein Bauteil des Aktors über diesen hinausragt,
   ∘ große seitliche Überdeckung des Movers im Verhältnis zum Joch und den Spulen, d. h. das Verhältnis von der Nutzfläche des Movers zum Gesamt-durchmesser des Aktuators ist sehr hoch,
   ∘ flache Bauform des Movers ergibt einen Drehpunkt des Movers fast an der Oberfläche des beweglichen Elements (ideal wäre Drehpunkt auf Oberfläche),
   ∘ E-förmiger Stator im Querschnitt bietet einen geringen Gesamt-Durchmesser des Aktors (im Gegensatz zu den üblicherweise verwendeten C-förmigen Stators)

Die vorliegende Erfindung stellt somit einen kompakten, hochdynamischen Aktor zur Verfügung, der in vielfältigen Anwendungen unter anderem beispielsweise für die schnelle Verkippung von Spiegeln für scannende optische Systeme in den Bereichen optische Kommunikation, Scan-Messtechnik, Zielverfolgung, etc. eingesetzt werden kann.

Obwohl die vorliegende Erfindung anhand bevorzugter Ausführungsbeispiele beschrieben wurde, ist sie nicht darauf beschränkt, sondern auf vielfältige Weise modifizierbar. Mit anderen Worten wird ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

### Bezugszeichenliste

- 1: Stator
- 2: Permanentmagnet
- 3: Aktorspule(n)
- 4: bewegliches Element / Joch
- 4': Strahlen / Arme
- 5: Biegeelement
- 6: Bohrung(en)
- 7: Kugellager
- 8: Wirbelstromsensor
- 9a, 9b, 9c: Luftspalt
- 10a, 10b: Festlegungspunkt
- 12: Aufhängung
- 13: innerer Polschuh
- 14: äußerer Polschuh
- 15: innerer Bereich
- 16: äußerer Bereich
- 17: Befestigungsring
- 17a: Schraube
- 18: Kern
- 50: magnetischer Fluss Vorspannung
- 51: magnetischer Fluss Spule
- 100: Drehmomentrichtung
- G: Gehäuse

## Patentansprüche

1. Reluktanz-Aktor umfassend
einen magnetisierbaren Stator (1),
zumindest zwei Spulen (3), die zur Erzeugung eines Magnetfeldes in dem Stator (1) ausgebildet sind, und
ein Joch (4) zum zumindest teilweise Schließen des magnetischen Flusses des Stators (1), wobei
das Joch (4) als bewegliches Element für Hub-/Kippbewegungen ausgebildet ist, wobei der Stator (1) einen permanentmagnetischen Bereich aufweist, und wobei der Stator (1) im Querschnitt entlang zweier Achsen, die unter einem bestimmten Winkel zueinander angeordnet sind, E-förmig mit zwei äußeren und einem inneren Polschuh (14, 13) ausgebildet ist und wobei
das bewegliche Element (4) mittels zumindest eines Biegeelements (5) an einem Gehäuse (G) des Reluktanz-Aktors beweglich angeordnet ist und ausgebildet ist, Hub-/Kippbewegungen um zumindest zwei Achsen durchzuführen, wobei je Achse zumindest eine der zumindest zwei Spulen (3) angeordnet ist, und wobei
das zumindest eine Biegeelement (5) einen inneren Bereich (15) und einen äußeren Bereich (16) sowie zumindest zwei Aufhängungen (12) aufweist, wobei die beiden Bereiche (15, 16) über die zumindest zwei Aufhängungen (12) miteinander verbunden sind, und wobei der äußere Bereich (16) des Biegeelements (5) an einem Gehäuse (G) des Reluktanz-Aktors angeordnet ist, und wobei das Biegeelement (5) von seiner Außenseite an dem Gehäuse (G) mittels eines umlaufenden Befestigungsrings (17) festgelegt ist.

2. Reluktanz-Aktor gemäß Anspruch 1, **dadurch gekennzeichnet, dass** der Winkel zwischen den beiden Achsen des Stators (1) 90° beträgt.

3. Reluktanz-Aktor gemäß Anspruch 1 oder 2, **dadurch gekennzeichnet, dass** zumindest eine der Spulen (3) eine Spulenachse aufweist, die im Wesentlichen senkrecht zur Auslenkungsrichtung des beweglichen Elements (4) angeordnet ist, insbesondere wobei der Stator (1) zumindest teilweise in der Spule (3) angeordnet ist.

4. Reluktanz-Aktor gemäß einem der Ansprüche 1-3, **dadurch gekennzeichnet, dass** der innere Polschuh (13) des E-förmigen Stators (1) entlang einer Achse identisch mit dem inneren Polschuh (13) entlang der zweiten Achse ist.

5. Reluktanz-Aktor gemäß einem der Ansprüche 1-4, **dadurch gekennzeichnet, dass** der permanentmagnetische Bereich am inneren Polschuh (13) des E-förmigen Stators (1) angeordnet ist, vorzugsweise wobei der permanentmagnetische Bereich im Übergangsbereich des die Polschuhe (13, 14) des E-förmigen Stators (1) verbindenden Bereichs angeordnet ist.

6. Reluktanz-Aktor gemäß einem der Ansprüche 1-5, **dadurch gekennzeichnet, dass** das zumindest eine Biegeelement (5) aus Aluminium und/oder Titan hergestellt ist.

7. Reluktanz-Aktor gemäß einem der Ansprüche 1-6, **dadurch gekennzeichnet, dass** das bewegliche Element (4) direkt mit dem zumindest einen Biegeelement (5), insbesondere mit dem inneren Bereich (15) des zumindest einen Biegeelements (5) verbunden ist und/oder dass das bewegliche Element (4) und das Biegeelement (5) einstückig ausgebildet sind, und/oder dass das bewegliche Element (4) und das Biegeelement (5) aus ferromagnetischem Stahl, insbesondere Federstahl, hergestellt sind und/oder dass das Biegeelement (4) oder das bewegliche Element (5) zumindest teilweise verspiegelt ausgebildet sind.

8. Reluktanz-Aktor gemäß einem der Ansprüche 1-7, **dadurch gekennzeichnet, dass** das bewegliche Element (4) mittels zumindest eines Lagers (7), insbesondere in Form eines Kugellagers, eines Punktlagers in Form einer Spitze aus Hartmetall oder Saphir oder in Form eines Biegebalkens, insbesondere mittig am inneren Polschuh (13) des Stators (1), gelagert ist und/oder dass das bewegliche Element (4) mittels zumindest eines Luftspalts (9a, 9b, 9c) zu dem Stator (1) beabstandet angeordnet ist und/oder dass der Stator (1) vier äußere Polschuhe (14) aufweist, wobei an jeweils zwei der vier Polschuhe (14), die jeweils gegenüberliegend angeordnet sind, jeweils eine Spule (3) angeordnet ist.

9. Reluktanz-Aktor gemäß einem der Ansprüche 1-8, **dadurch gekennzeichnet, dass** der Stator (1) geblecht ausgebildet ist, insbesondere wobei nur die äußeren Polschuhe (14) des Stators (1) aus mehreren isolierenden Schichten hergestellt sind.

10. Reluktanz-Aktor gemäß einem der Ansprüche 1-9, **dadurch gekennzeichnet, dass** der innere Polschuh (13) des Stators (1) zylinderförmig ausgebildet ist.

11. Reluktanz-Aktor gemäß einem der Ansprüche 1-10, **dadurch gekennzeichnet, dass** das Joch (4) ferromagnetisch ausgebildet ist und/oder dass das Joch (4) aus Stahl hergestellt ist und/oder dass das bewegliche Element (4) im Wesentlichen als, vorzugsweise kreis-, ellipsen- oder sternförmige, Scheibe ausgebildet ist, vorzugsweise wobei entlang zumindest einer Achse die Scheibe symmetrisch ausgebildet ist.

12. Reluktanz-Aktor gemäß einem der Ansprüche 1-11, **dadurch gekennzeichnet, dass** vier Aufhängungen (12) angeordnet sind, wobei der Festlegungspunkt der jeweiligen Aufhängung (12) am inneren Bereich (15) und am äußeren Bereich (16) des beweglichen Elements (4) in Umfangsrichtung jeweils um 90° versetzt zueinander angeordnet sind, vorzugsweise wobei die Form der zumindest einen Aufhängung (12) im Wesentlichen zumindest teilweise entsprechend dem Verlauf der Außenkontur des inneren Bereichs (15) und/oder des beweglichen Elements (4) ausgebildet ist.

13. Reluktanz-Aktor gemäß einem der Ansprüche 1-12, **dadurch gekennzeichnet, dass** das Joch (4) einen im Wesentlichen seitlichen äußeren Abschluss des Aktors bildet.

14. Aktor-System, umfassend einen Reluktanz-Aktor, **dadurch gekennzeichnet, dass** der Reluktanz-Aktor gemäß einem der Ansprüche 1-13 ausgebildet ist und zumindest teilweise in einem nicht magnetischen Gehäuse (G), bspw. ein Aluminium-Gehäuse, angeordnet ist, insbesondere wobei eine Rückmeldungs- und Steuereinrichtung angeordnet und mit dem Reluktanz-Aktor verbunden ist, zur Kontrolle der Bewegung des beweglichen Elements (4) um zumindest eine Achse, vorzugsweise wobei die Rückmeldungs- und Steuereinrichtung eine Positionsmesseinheit, insbesondere eine Winkelpositionsmesseinheit, eine Stromverstärkereinheit oder eine Spannungsverstärkereinheit, und/oder eine Ausgangstrommesseinheit umfasst.

15. Verfahren zur Durchführung von Hub-/Kippbewegungen eines beweglichen Elements (4) eines Reluktanz-Aktors, wobei der Reluktanz-Aktor mit einem magnetisierbaren Stator (1), zumindest zwei Spulen (3), die zur Erzeugung eines Magnetfeldes in dem Stator (1) ausgebildet werden und ein Joch (4) zum zumindest teilweisen Schließen des magnetischen Flusses versehen wird, wobei
der Stator (1) mit einem permanentmagnetischen Bereich versehen wird und wobei der Stator (1) im Querschnitt entlang zweier Achsen, die unter einem bestimmten Winkel zueinander angeordnet werden, E-förmig mit zwei äußeren und einem inneren Polschuh (14, 13) ausgebildet wird, und wobei
das Joch (4) als bewegliches Element für Hub-/Kippbewegungen ausgebildet wird und mittels Steuerung des Magnetfelds bewegt wird, und wobei
das bewegliche Element (4) mittels zumindest eines Biegeelements (5) an einem Gehäuse (G) des Reluktanz-Aktors beweglich angeordnet wird und ausgebildet wird, Hub-/Kippbewegungen um zumindest zwei Achsen durchzuführen, wobei je Achse zumindest eine der zumindest zwei Spulen (3) angeordnet ist, und wobei
das zumindest eine Biegeelement (5) mit einem inneren Bereich (15) und einem äußeren Bereich (16) sowie zumindest zwei Aufhängungen (12) versehen wird, wobei die beiden Bereiche (15, 16) über die zumindest zwei Aufhängungen (12) miteinander verbunden werden, und wobei der äußere Bereich (16) des Biegeelements (5) an einem Gehäuse (G) des Reluktanz-Aktors angeordnet wird, und wobei das Biegeelement (5) von seiner Außenseite an dem Gehäuse (G) mittels eines umlaufenden Befestigungsrings (17) festgelegt wird.

## Claims

1. Reluctance actuator comprising
a magnetisable stator (1),
at least two coils (3) which are constructed to produce a magnetic field in the stator (1), and
a yoke (4) for at least partially closing the magnetic flux of the stator (1), wherein
the yoke (4) is in the form of a movable element for lifting/tilting movements, wherein the stator (1) has a permanently magnetic region, and wherein the stator (1) is constructed, in cross-section along two axes which are arranged with respect to each other at a specific angle, in an E-shaped manner with two outer and one inner pole shoe(s) (14, 13), and wherein
the movable element (4) is movably arranged by means of at least one bending element (5) on a housing (G) of the reluctance actuator and is constructed to carry out lifting/tilting movements about at least two axes, wherein at least one of the at least two coils (3) is arranged per axis, and wherein
the at least one bending element (5) has an inner region (15) and an outer region (16) and at least two suspensions (12), wherein the two regions (15, 16) are connected to each other by means of the at least two suspensions (12), and wherein the outer region (16) of the bending element (5) is arranged on a housing (G) of the reluctance actuator, and wherein the bending element (5) is secured from the outer side thereof to the housing (G) by means of a circumferential securing ring (17).

2. Reluctance actuator according to claim 1, **characterized in that** the angle between the two axes of the stator (1) is 90°.

3. Reluctance actuator according to claim 1 or 2, **characterized in that** at least one of the coils (3) has a coil axis which is arranged substantially perpendicularly to the deflection direction of the movable element (4), in particular wherein the stator (1) is arranged at least partially in the coil (3).

4. Reluctance actuator according to any one of claims 1 to 3, **characterized in that** the inner pole shoe (13) of the E-shaped stator (1) along one axis is identical to the inner pole shoe (13) along the second axis.

5. Reluctance actuator according to any one of claims 1 to 4, **characterized in that** the permanently magnetic region is arranged on the inner pole shoe (13) of the E-shaped stator (1), preferably wherein the permanently magnetic region is arranged in the transition region of the region which connects the pole shoes (13, 14) of the E-shaped stator (1).

6. Reluctance actuator according to any one of claims 1 to 5, **characterized in that** the at least one bending element (5) is produced from aluminium and/or titanium.

7. Reluctance actuator according to any one of claims 1 to 6, **characterized in that** the movable element (4) is connected directly to the at least one bending element (5), in particular to the inner region (15) of the at least one bending element (5), and/or **in that** the movable element (4) and the bending element (5) are constructed in one piece, and/or **in that** the movable element (4) and the bending element (5) are produced from ferromagnetic steel, in particular spring steel, and/or **in that** the bending element (4) or the movable element (5) is/are constructed to be at least partially metal-coated.

8. Reluctance actuator according to any one of claims 1 to 7, **characterized in that** the movable element (4) is supported by means of at least one bearing (7), in particular in the form of a ball bearing, a point bearing in the form of a tip made of hard metal or sapphire or in the form of a bending bar, in particular centrally on the inner pole shoe (13) of the stator (1), and/or **in that** the movable element (4) is arranged by means of at least one air gap (9a, 9b, 9c) with spacing from the stator (1) and/or **in that** the stator (1) has four outer pole shoes (14), wherein a coil (3) is arranged on two of the four pole shoes (14) which are arranged opposite each other in each case.

9. Reluctance actuator according to any one of claims 1 to 8, **characterized in that** the stator (1) is constructed in a laminated manner, in particular wherein only the outer pole shoes (14) of the stator (1) are produced from a plurality of insulating layers.

10. Reluctance actuator according to any one of claims 1 to 9, **characterized in that** the inner pole shoe (13) of the stator (1) is constructed in a cylindrical manner.

11. Reluctance actuator according to any one of claims 1 to 10, **characterized in that** the yoke (4) is constructed in a ferromagnetic manner, and/or **in that** the yoke (4) is produced from steel and/or **in that** the movable element (4) is constructed substantially as a preferably circular, elliptical or star-like disc, preferably wherein the disc is formed symmetrically along at least one axis.

12. Reluctance actuator according to any one of claims 1 to 11, **characterized in that** four suspensions (12) are arranged, wherein the securing location of the respective suspension (12) on the inner region (15) and on the outer region (16) of the movable element (4) is arranged to be offset with respect to each other in the circumferential direction through 90° in each case, preferably wherein the shape of the at least one suspension (12) is constructed to substantially at least partially correspond to the path of the outer contour of the inner region (15) and/or the movable element (4).

13. Reluctance actuator according to any one of claims 1 to 12, **characterized in that** the yoke (4) forms a substantially lateral outer termination of the actuator.

14. Actuator system comprising a reluctance actuator, **characterized in that** the reluctance actuator is constructed according to any one of claims 1 to 13, and is arranged at least partially in a non-magnetic housing (G), for example, an aluminium housing, in particular wherein a feedback and control device is arranged and connected to the reluctance actuator in order to control the movement of the movable element (4) about at least one axis, preferably wherein the feedback and control device comprises a position measurement unit, in particular an angular position measurement unit, a current amplification unit or a voltage amplification unit and/or an output current measurement unit.

15. Method for carrying out lifting/tilting movements of a movable
element (4) of a reluctance actuator, wherein the reluctance actuator is provided with a magnetisable stator (1), at least two coils (3) which are constructed to produce a magnetic field in the stator (1) and a yoke (4) for at least partially closing the magnetic flux, wherein
the stator (1) is provided with a permanently magnetic region and wherein the stator (1) is constructed, in cross-section along two axes which are arranged with respect to each other at a specific angle, in an E-shaped manner with two outer and one inner pole shoe(s) (14, 13), and wherein
the yoke (4) is in the form of a movable element for lifting/tilting movements and is moved by means of control of the magnetic field, and wherein
the movable element (4) is movably arranged by means of at least one bending element (5) on a housing (G) of the reluctance actuator and is constructed to carry out lifting/tilting movements about at least two axes, wherein at least one of the at least two coils (3) is arranged per axis, and wherein the at least one bending element (5) is provided with an inner region (15) and an outer region (16) and at least two suspensions (12), wherein the two regions (15, 16) are connected to each other by means of the at least two suspensions (12), and wherein the outer region (16) of the bending element (5) is arranged on a housing (G) of the reluctance actuator, and wherein the bending element (5) is secured from the outer side thereof to the housing (G) by means of a circumferential securing ring (17).

## Revendications

1. Actionneur à réluctance comprenant
un stator magnétisable (1),
au moins deux bobines (3) conçues pour générer un champ magnétique dans le stator (1) et
une culasse (4) pour fermer au moins partiellement le flux magnétique du stator (1),
la culasse (4) étant conçue comme un élément mobile pour des mouvements de levage/basculement, le stator (1) présentant une zone magnétique permanente, et le stator (1) étant conçu en section transversale le long de deux axes agencés l'un par rapport à l'autre selon un angle déterminé en forme de E avec deux pièces polaires extérieures et une pièce polaire intérieure (14, 13), et
l'élément mobile (4) étant agencé de manière mobile au moyen d'au moins un élément de flexion (5) sur un boîtier (G) de l'actionneur à réluctance et étant conçu pour effectuer des mouvements de levage/basculement autour d'au moins deux axes, au moins une des au moins deux bobines (3) étant agencée par axe, et
l'au moins un élément de flexion (5) présentant une zone intérieure (15) et une zone extérieure (16) ainsi qu'au moins deux suspensions (12), les deux zones (15, 16) étant reliées entre elles par les au moins deux suspensions (12), et la zone extérieure (16) de l'élément de flexion (5) étant agencée sur un boîtier (G) de l'actionneur à réluctance, et l'élément de flexion (5) étant fixé depuis son côté extérieur sur le boîtier (G) au moyen d'une bague de fixation périphérique (17).

2. Actionneur à réluctance selon la revendication 1, **caractérisé en ce que** l'angle entre les deux axes du stator (1) est de 90°.

3. Actionneur à réluctance selon la revendication 1 ou 2, **caractérisé en ce qu'**au moins l'une des bobines (3) présente un axe de bobine qui est agencé essentiellement perpendiculairement à la direction de déviation de l'élément mobile (4), le stator (1) étant notamment agencé au moins en partie dans la bobine (3).

4. Actionneur à réluctance selon l'une des revendications 1 à 3, **caractérisé en ce que** la pièce polaire intérieure (13) du stator en forme de E (1) est identique à la pièce polaire intérieure (13) le long du deuxième axe.

5. Actionneur à réluctance selon l'une des revendications 1 à 4, **caractérisé en ce que** la zone à aimant permanent est agencée sur la pièce polaire intérieure (13) du stator en forme de E (1), la zone à aimant permanent étant de préférence agencée dans la zone de transition de la zone reliant les pièces polaires (13, 14) du stator en forme de E (1).

6. Actionneur à réluctance selon l'une des revendications 1 à 5, **caractérisé en ce que** l'au moins un élément de flexion (5) est fabriqué en aluminium et/ou en titane.

7. Actionneur à réluctance selon l'une des revendications 1 à 6, **caractérisé en ce que** l'élément mobile (4) est relié directement à l'au moins un élément de flexion (5), en particulier à la zone intérieure (15) dudit au moins un élément de flexion (5), et/ou **en ce que** l'élément mobile (4) et l'élément de flexion (5) sont réalisés d'un seul tenant, et/ou **en ce que** l'élément mobile (4) et l'élément de flexion (5) sont fabriqués en acier ferromagnétique, en particulier en acier à ressort, et/ou **en ce que** l'élément flexible (4) ou l'élément mobile (5) sont au moins partiellement réfléchissants.

8. Actionneur à réluctance selon l'une des revendications 1 à 7, **caractérisé en ce que** l'élément mobile (4) est relié au moyen d'au moins un palier (7), en particulier sous la forme d'un roulement à billes, d'un palier ponctuel sous la forme d'une pointe en métal dur ou en saphir ou sous la forme d'une poutre flexible, en particulier au centre de la pièce polaire intérieure (13) du stator (1), et/ou **en ce que** l'élément mobile (4) est espacé du stator (1) au moyen d'au moins un entrefer (9a, 9b, 9c) et/ou **en ce que** le stator (1) présente quatre pièces polaires extérieures (14), une bobine (3) étant agencée sur chacune des deux des quatre pièces polaires (14) qui sont agencées en vis-à-vis.

9. Actionneur à réluctance selon l'une des revendications 1 à 8, **caractérisé en ce que** le stator (1) est réalisé en tôle, en particulier seules les pièces polaires extérieures (14) du stator (1) étant constituées de plusieurs couches isolantes.

10. Actionneur à réluctance selon l'une des revendications 1 à 9, **caractérisé en ce que** la pièce polaire intérieure (13) du stator (1) est réalisée sous forme cylindrique.

11. Actionneur à réluctance selon l'une des revendications 1 à 10, **caractérisé en ce que** la culasse (4) est ferromagnétique et/ou **en ce que** la culasse (4) est fabriquée en acier et/ou **en ce que** l'élément mobile (4) est essentiellement conçu comme un disque, de préférence circulaire, elliptique ou en forme d'étoile, le disque étant de préférence symétrique le long d'au moins un axe.

12. Actionneur à réluctance selon l'une des revendications 1 à 11, **caractérisé en ce que** quatre suspensions (12) sont agencées, le point de fixation de chaque suspension (12) étant décalé de 90° par rapport aux autres dans la direction circonférentielle au niveau de la zone intérieure (15) et de la zone extérieure (16) de l'élément mobile (4), de préférence la forme de l'au moins une suspension (12) étant essentiellement au moins partiellement conçue en fonction du tracé du contour extérieur de la zone intérieure (15) et/ou de l'élément mobile (4).

13. Actionneur à réluctance selon l'une des revendications 1 à 12, **caractérisé en ce que** la culasse (4) forme une extrémité extérieure essentiellement latérale de l'actionneur.

14. Système d'actionneurs comprenant un actionneur à réluctance, **caractérisé en ce que** l'actionneur à réluctance est conçu selon l'une des revendications 1 à 13 et est agencé au moins en partie dans un boîtier non magnétique (G), par exemple un boîtier en aluminium, en particulier un dispositif de rétroaction et de commande étant agencé et relié à l'actionneur à réluctance pour contrôler le mouvement de l'élément mobile (4) autour d'au moins un axe, le dispositif de rétroaction et de commande comprenant de préférence une unité de mesure de position, en particulier une unité de mesure de position angulaire, une unité d'amplification de courant ou une unité d'amplification de tension, et/ou une unité de mesure de courant de sortie.

15. Procédé pour effectuer des mouvements de levage/basculement d'un élément mobile (4) d'un actionneur à réluctance, l'actionneur à réluctance étant pourvu d'un stator magnétisable (1), d'au moins deux bobines (3) qui sont conçues pour générer un champ magnétique dans le stator (1) et d'une culasse (4) pour fermer au moins partiellement le flux magnétique,
le stator (1) étant pourvu d'une zone magnétique permanente et le stator (1) étant conçu en section transversale le long de deux axes, qui sont agencés selon un certain angle l'un par rapport à l'autre, en forme de E avec deux pièces polaires extérieures et une pièce polaire intérieure (14, 13),
la culasse (4) étant conçue comme un élément mobile pour des mouvements de levage/basculement et se déplaçant au moyen d'une commande du champ magnétique, et
l'élément mobile (4) étant agencé de manière mobile au moyen d'au moins un élément de flexion (5) sur un boîtier (G) de l'actionneur à réluctance et étant conçu pour effectuer des mouvements de levage/basculement autour d'au moins deux axes, au moins une des au moins deux bobines (3) étant agencée par axe, et
l'au moins un élément de flexion (5) étant pourvu d'une zone intérieure (15) et d'une zone extérieure (16) ainsi que d'au moins deux suspensions (12), les deux zones (15, 16) étant reliées entre elles par les au moins deux suspensions (12), et la zone extérieure (16) de l'élément de flexion (5) étant agencée sur un boîtier (G) de l'actionneur à réluctance, et l'élément de flexion (5) étant fixé depuis son côté extérieur sur le boîtier (G) au moyen d'une bague de fixation périphérique (17).
